(19) Europäisches Patentamt / European Patent Office / Office européen des brevets

(11) **EP 2 266 101 B1**

(12) **FASCICULE DE BREVET EUROPEEN**

(45) Date de publication et mention de la délivrance du brevet:
**22.05.2013 Bulletin 2013/21**

(51) Int Cl.:
***G06T 19/00*** *(2011.01)*

(21) Numéro de dépôt: **09711507.5**

(22) Date de dépôt: **04.02.2009**

(86) Numéro de dépôt international:
**PCT/FR2009/050170**

(87) Numéro de publication internationale:
**WO 2009/101327 (20.08.2009 Gazette 2009/34)**

(54) **PROCEDE ET DISPOSITIF DE SIMULATION DE CONTACT PAR IMAGES A PLAN DE PROFONDEUR**

VERFAHREN UND EINRICHTUNG ZUR KONTAKTSIMULATION UNTER VERWENDUNG VON GESCHICHTETEN TIEFENBILDERN

METHOD AND DEVICE FOR CONTACT SIMULATION USING LAYERED DEPTH IMAGES

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **04.02.2008 FR 0850693**

(43) Date de publication de la demande:
**29.12.2010 Bulletin 2010/52**

(73) Titulaire: **Universite Joseph Fourier**
**38000 Grenoble (FR)**

(72) Inventeur: **FAURE, François, Jean, Roger**
**F-38920 Crolles (FR)**

(74) Mandataire: **Pontet, Bernard et al**
**Pontet Allano & Associés s.e.l.a.r.l.**
**25, rue Jean Rostand**
**Parc Club Orsay Université**
**91893 Orsay Cedex (FR)**

(56) Documents cités:
- **HIROTA G ET AL: "An implicit finite element method for elastic solids in contact" COMPUTER ANIMATION, 2001. THE FOURTEENTH CONFERENCE ON COMPUTER ANIMAT ION. PROCEEDINGS NOV. 7-8, 2001, PISCATAWAY, NJ, USA,IEEE, 7 novembre 2001 (2001-11-07), pages 136-146, XP010576635 ISBN: 978-0-7803-7237-5**
- **HEIDELBERGER B ET AL: "Real-Time Volumetric Intersections of Deforming Objects" PROCEEDINGS OF THE VISION, MODELING, AND VISUALIZATION CONFERENCE 2003 (VMV 2003), 19 novembre 2003 (2003-11-19), - 21 novembre 2003 (2003-11-21) pages 461-468, XP002495015 München, Germany ISBN: 3-89838-048-3 cité dans la demande**
- **TERZOPOULOS D: "ELASTICALLY DEFORMABLE MODELS" COMPUTER GRAPHICS, ACM, US, vol. 21, no. 4, 1 juillet 1987 (1987-07-01), pages 205-214, XP000677031 ISSN: 0097-8930**
- **FAURE F ET AL: "Image-based Collision Detection and Response between Arbitrary Volume Objects"[Online] juillet 2008 (2008-07), XP002495016 Extrait de l'Internet: URL:http: //www-ljk.imag.fr/Publications/Ba silic/com.lmc.publi.PUBLI_Inproceedings@11 a3a80d87d_19a029e/main.pdf> [extrait le 2008-09-09]**

**Description**

La présente invention concerne un procédé de simulation d'un contact entre au moins deux objets volumiques délimités par des surfaces triangulaires.

Elle trouve une application particulièrement intéressante dans le domaine de simulation physique en temps réel pour jeu vidéo ou simulateurs chirurgicaux. Mais elle est d'un cadre plus large puisqu'elle peut s'appliquer à toute simulation impliquant des objets en contact avec une géométrie non triviale.

Une simulation d'objets mécaniques peut être schématiquement décomposée en quatre processus principaux : la détection de collision, le calcul des forces de contact, le calcul des forces internes, et l'intégration du temps. La détection de collisions est souvent l'opération de traitement la plus intense et a largement fait l'objet d'études approfondies pendant de nombreuses années. Ce traitement est important puisque la crédibilité de la simulation en dépend.

Des tests géométriques précis et des calculs d'intersection en profondeur sont nécessaires pour déterminer des forces d'interaction entre des surfaces de contact. Les objets sont généralement décomposés en primitives de contact telles que des sphères ou des triangles. Cependant, les primitives sphériques conduisent à des approximations peu convaincantes de la surface de contact et entraînent malheureusement des artefacts importants. Les primitives à base de triangles sont plus efficaces mais nécessitent plus de calculs géométriques que les sphères. De toute manière, les calculs des forces de répulsion sont complexes à mettre en oeuvre et des fonctions discontinues de l'espace peuvent apparaître. Pour des objets rigides, il est possible de réaliser des calculs préalables afin d'éviter ces fonctions discontinues, mais cela est difficilement envisageable pour des objets déformables. La détection de collisions et le calcul de forces de contact restent donc des tâches extrêmement difficiles à mettre en oeuvre.

Dans l'art antérieur, on connaît le document Teschner et al., « Collision detection for deformable objects. » Computer Graphics Forum 24, 1 (March 2005), 61-81, dans lequel on décrit la détection de collision et des techniques de réponse. Ce document décrit des techniques de création de hiérarchies de volumes englobants pour palier la complexité quadratique inhérente à la détection de collision. Ce document met en oeuvre la technique des champs de distance pour obtenir des détections de collision robustes. Dans cette technique, pour tout point de l'espace, on stocke la "caractéristique la plus proche" *(closest feature)* qui est l'élément de la surface le plus proche à ce point, de façon à permettre des intersections en profondeur. En pratique, cette technique n'est utilisée que pour des objets rigides car elle nécessite des calculs préalables (prétraitement) de champ de distance lors de l'initialisation de la simulation. Il subsiste également des problèmes de discontinuité de l'application d'un espace 3D vers une surface, ce qui peut générer des réponses instables.

D'une façon générale, les systèmes informatiques actuels tels que les ordinateurs personnels intègrent une carte graphique qui a pour fonction de gérer le traitement et l'affichage de composants graphiques de plus en plus complexes. Cette carte graphique permet notamment d'accélérer l'affichage 3D. Pour ce faire, elle comporte une unité de traitement graphique GPU *(Graphics Processing Unit* en langue anglaise) qui est un processeur optimisé pour la 3D.

Récemment, pour exploiter la puissance de calcul des GPU et leur capacité à échantillonner efficacement les polygones, des méthodes basées-image ont été introduites. Pour des géométries de maillage données, ces méthodes génèrent des paires de primitives géométriques, qui sont ensuite traitées par la CPU pour calculer les forces de contact. Comme elles n'utilisent pas de structures de données volumiques, elles peuvent être efficacement appliquées à des objets rigides et des objets déformables. Les paires de contacts peuvent être composées de triangles ou de points dans des volumes. Après détection, des calculs supplémentaires de la CPU sont nécessaires pour modéliser les intersections et les forces de contact.

On connaît le document Heidelberger et al. « Real-time volumetric intersections of deforming objects ». In Proceedings of Vision, Modeling, Visualization (VMV), Munich, Germany, November 19-21, 2003, qui décrit un algorithme des « Images à plan de profondeurs » LDI *(Layered Depth Images* en langue anglaise). Cet algorithme permet de représenter de façon compacte plusieurs couches de la géométrie d'une intersection d'objets à partir d'un point de vue donné. Cet algorithme permet de construire des modèles géométriques du volume d'intersection. Selon cet algorithme, on calcule des boîtes englobants les objets. Puis, pour chaque paire d'objets potentiellement en collision, un axe de visualisation est choisi et l'ensemble de la surface de chaque objet est rendu dans une variété de textures (LDI). On visualise les surfaces contenues dans l'intersection des boîtes englobantes, une visualisation étendue selon la direction de visualisation de façon à inclure toutes les couches de surface. La détection de collision est ensuite effectuée compte tenu des paires de texels *(texture pixel)* consécutifs, ou triplets pour l'auto-collision, le long de l'axe de visualisation. Cette méthode simple et rapide évite des opérations de prétraitement. Cependant, ce document traite uniquement de la détection de collision et reste muet quant au calcul des forces de contact.

La présente invention a pour but de remédier aux inconvénients précités en limitant notamment les calculs géométriques complexes.

Un autre but de l'invention est une méthode permettant de calculer rapidement les forces de contact des objets simulés rigides et déformables, sans faire appel à des pré-traitements géométriques.

On atteint au moins l'un des objectifs précités avec un procédé de simulation interactive d'une intersection entre au moins deux objets volumiques modélisés au moyen de primitives géométriques, notamment des surfaces triangulaires. Ce procédé comprend les étapes suivantes :

a) on détermine un polyèdre englobant un volume d'intersection entre les deux objets,

b) pour un axe de visualisation donné du polyèdre, on applique un algorithme des « Images à plan de profondeurs » LDI de façon à déterminer un ensemble de pixels de contact ; ces pixels étant des éléments de la surface du volume d'intersection des objets simulés.

Selon l'invention, on réalise en outre les étapes suivantes :

c) on calcule la taille (en mètres cubes) du volume d'intersection à partir des pixels de contact,

d) à chaque sommet des primitives géométriques dans le polyèdre, on calcule une dérivée partielle de la taille du volume d'intersection V par rapport à sa coordonnée selon l'axe de visualisation,

e) on répète au moins les étapes b) et d) pour deux autres axes de visualisation orthogonaux de façon à déterminer des dérivées partielles selon trois axes orthogonaux, on obtient alors un vecteur gradient, et

f) à chaque sommet des primitives géométriques des objets, on associe une force $f$ calculée à partir desdites dérivées partielles.

Ces étapes sont exécutées en statique, il n'y a pas d'intégration temporelle.

Les deux objets peuvent être deux parties d'une même entité, ce qui permet de traiter l'auto-collision.

Avec le procédé selon l'invention on modélise par algorithme LDI les surfaces de contact sous forme de champs de hauteurs échantillonnés selon trois directions orthogonales. Des forces de pression agissant sur la surface de contact peuvent alors être calculées d'après les dérivées partielles du volume d'intersection dans les trois directions. Aucun document de l'art antérieur ne décrit la réalisation de l'algorithme LDI sur trois axes orthogonaux et le calcul de la force à partir des dérivées partielles du volume d'intersection. Ces dérivées partielles peuvent être avantageusement calculées à partir d'images créées au sein d'une carte graphique. Par conséquent, on peut utiliser un matériel graphique standard tel qu'une carte graphique d'ordinateur personnel pour calculer les forces de contact entre objets simulés.

La présente invention est une méthode à base d'images qui est capable de directement calculer les composants des forces de contact qui sont appliquées au niveau des sommets de triangles. Plus précisément, on étend l'algorithme LDI en élaborant un nouveau modèle géométrique basé sur les pixels. Non seulement on modélise le volume d'intersection, mais on modélise également sa dérivée par rapport aux coordonnées des sommets. On peut alors efficacement prendre en compte des intersections profondes tout en évitant des calculs géométriques complexes.

Par ailleurs, le polyèdre est défini comme étant un volume issu de l'intersection entre deux boîtes englobant respectivement les deux objets. De préférence, il s'agit d'un parallélépipède rectangle, les trois axes de visualisation étant trois axes orthogonaux de ce parallélépipède rectangle.

Le calcul des forces est indépendant des dynamiques internes des objets et les surfaces peuvent être attachées à divers modèles physiques.

Selon l'invention, à l'étape b) on peut associer à chaque pixel de contact :

- une valeur de hauteur,
- un identifiant de la primitive géométrique associée à ce pixel,
- un identifiant de l'objet auquel appartient ce pixel,
- une orientation de la normale à la primitive géométrique associée à ce pixel, et
- des coordonnées barycentriques sur la primitive géométrique associée à ce pixel.

Le volume d'intersection V peut être calculé de différentes manières. Un exemple de réalisation est de modéliser par des rectangles la surface définie par le volume d'intersection vu selon l'axe de visualisation (cela correspond à une vue en coupe du volume d'intersection). Dans ce cas, à l'étape c), on calcule le volume d'intersection V à partir de l'équation suivante :

$$V = a \sum_{(i,j) \in C} (-1)^d z_{i,j}$$

« a » étant l'aire d'un pixel ;« C » un ensemble d'indices de pixels qui couvrent la surface du volume d'intersection ; $z_{i,j}$ la hauteur des pixels de contact ; « d » étant égale à 2 ou à 1 selon qu'il s'agisse d'un pixel supérieur ou d'un pixel inférieur, cette notion de pixel supérieur ou inférieur est définie dans l'algorithme LDI. En effet, dans la représentation en champs de hauteur, une collision fait intervenir une paire de pixels, un pixel supérieur et un pixel inférieur ; « d » est égale à 2 pour le pixel supérieur, « d » est égale à 1 pour le pixel inférieur.

Selon l'invention, pour calculer la force on suppose que les forces de répulsion ont tendance à minimiser le volume d'intersection. On définit donc une énergie potentielle E associée au volume d'intersection V. Avantageusement, à l'étape f), la force peut être définie par l'équation suivante : $$f = -\frac{\partial E}{\partial x}$$ x étant un vecteur de coordonnées de sommets.

Avantageusement, cette énergie E est une fonction croissante du volume d'intersection V. La force correspondante est donc proportionnelle au gradient du volume. On peut par exemple définir l'énergie potentielle E par l'équation suivante : $E = \dfrac{1}{2}kV^2$ , et obtenir $f = -kV\dfrac{\partial V}{\partial x}$ , k étant un nombre positif.

Les forces de répulsions sont parallèles à la normale aux triangles et proportionnelles à leur aire puisque le gradient de volume (dérivée partielle du volume) indique la direction de variation maximum du volume. Les forces peuvent être interprétées comme étant la somme des forces de pression intégrées sur la surface du volume d'intersection.

Selon une caractéristique avantageuse de l'invention, la dérivée partielle du volume d'intersection par rapport à la coordonnée z d'un sommet A de l'axe de la LDI est définie par l'équation suivante :

$$\frac{\partial V}{\partial z} = a \sum_{(i,j)\in C} (-1)^d \frac{\partial z_{i,j}}{\partial z}$$

On peut noter que le terme $\dfrac{\partial z_{i,j}}{\partial z}$ correspond en fait au coefficient d'ombrage (barycentrique) de Gouraud, généralement utilisé pour interpoler la hauteur et la couleur d'un pixel (i, j).

Selon un mode de mise en oeuvre avantageux de l'invention, à l'étape e) on répète également l'étape c), le volume d'intersection V à considérer pour les étapes suivantes étant 1/3 d'une valeur obtenue en sommant le volume d'intersection calculée à chaque répétition. Cette technique permet d'approcher la valeur exacte du volume d'intersection par sa valeur moyenne sur les trois axes de visualisation.

Avantageusement, le dispositif peut comprendre en outre au moins un registre de volume pour stocker des valeurs de volume d'intersection calculés, et un registre de gradient consistant en un vecteur contenant trois valeurs scalaires par sommet, chacune associée à un axe de visualisation.

Selon un mode de mise en oeuvre de l'invention, pour une simulation interactive dynamique, on peut utiliser une matrice de raideur pour encoder la variation des forces en réponse à la variation des positions des sommets. Cette matrice de raideur peut être déterminée en calculant un différentiel de la force f, et approximée selon la formule suivante si l'on part d'une équation précédente :

$$\frac{\partial f}{\partial x} = -\frac{\partial V}{\partial x} k \frac{\partial V^T}{\partial x}$$

Selon un autre aspect de l'invention, il est proposé un dispositif de simulation interactive d'une intersection entre au moins deux objets volumiques modélisés au moyen de primitives géométriques. Selon l'invention, ce dispositif comporte une unité de traitement graphique GPU mettant en oeuvre un procédé tel que décrit précédemment de façon à calculer des forces de contact.

Le dispositif peut être une machine globale longeant l'unité de traitement graphique GPU ainsi qu'une unité centrale de traitement CPU (Central Processing Unit) apte à récupérer des images calculées par l'unité de traitement graphique et à en déduire les forces à appliquer sur les deux objets.

D'autres avantages et caractéristiques de l'invention apparaîtront à l'examen de la description détaillée d'un mode de mise en oeuvre nullement limitatif, et des dessins annexés, sur lesquels :

La figure 1 est une vue générale simplifiée d'une unité de traitement graphique en communication avec une CPU,

Les figures 2 et 3 illustrent des étapes de mise en oeuvre de l'algorithme LDI, et

Les figures 4 à 7 sont des vues simplifiées en deux dimensions de deux objets en intersection à différentes stades du procédé selon l'invention pour le calcul des forces de contact.

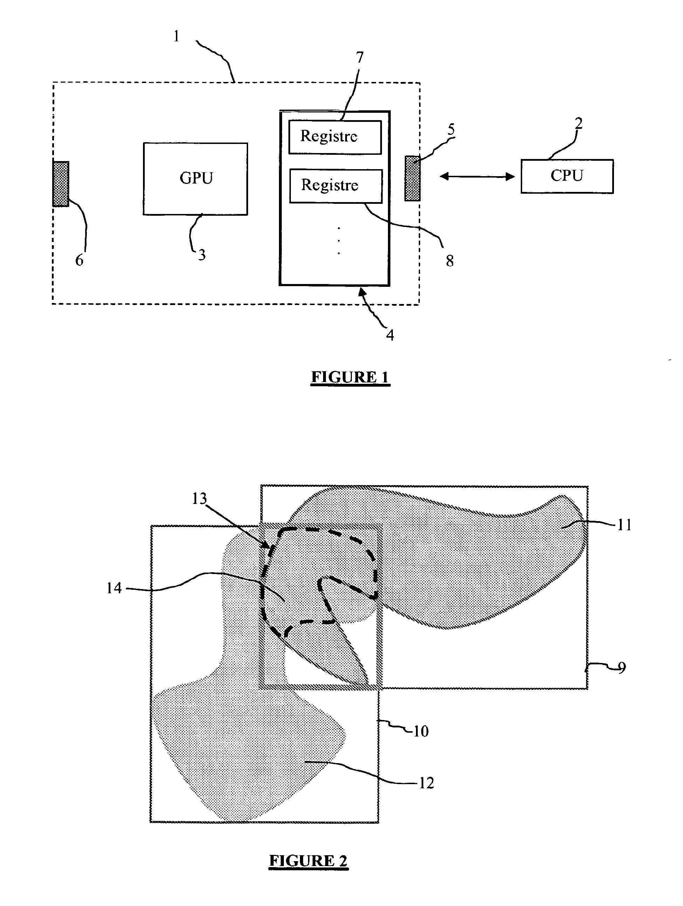

A titre d'exemple non limitatif, la présente invention peut être mise en oeuvre au sein d'un processeur graphique GPU destiné à créer des pixels à partir de surfaces triangulaires. Sur la figure 1 on voit de façon très schématique une carte graphique 1 communiquant avec un processeur CPU 2. La carte graphique est dotée notamment d'un processeur graphique GPU 3, d'une zone mémoire 4 et de connecteurs 5, 6 pour communiquer avec la CPU 2 et un moyen d'affichage non représenté. Dans cette zone mémoire 4 on distingue en particulier un registre de volume 7 pour stocker des valeurs de volume d'intersection calculées et un registre de gradient 8 pour stocker un vecteur contenant les dérivées partielles par rapport à chaque sommet d'une surface triangulaire conformément à l'invention. Ces registres 7, 8 peuvent également se trouver dans une mémoire RAM du côté CPU.

De préférence, la carte graphique exécute l'algorithme LDI dont les données de sortie sont récupérées puis traitées par le processeur CPU pour le reste des opérations selon l'invention.

De même, l'ensemble du processus selon l'invention peut également s'exécuter sur le processeur CPU directement.

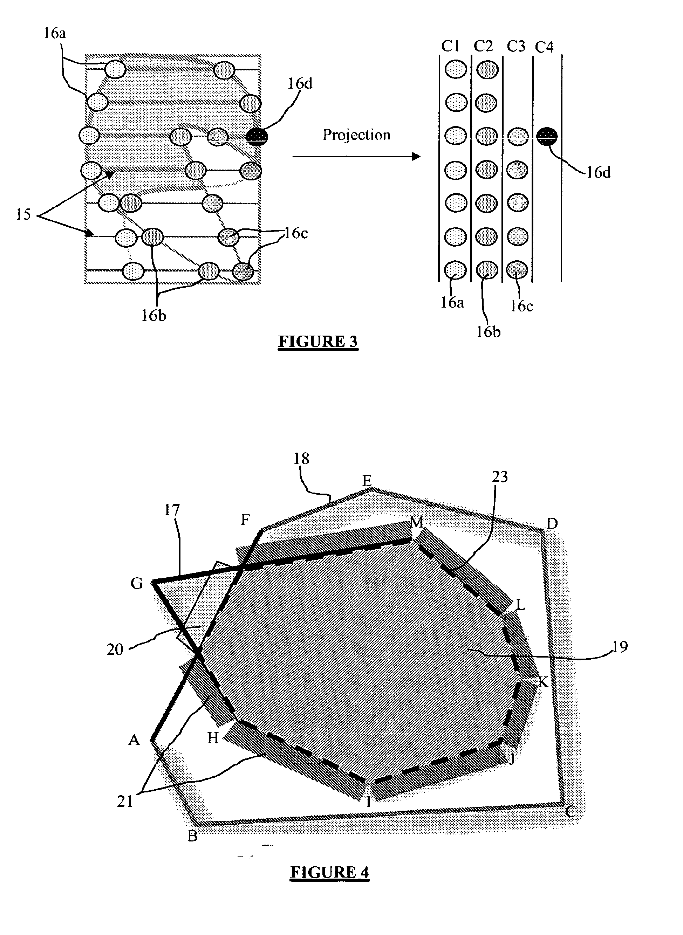

On va maintenant décrire en référence aux figures 2 et 3 la technique LDI appliquée à deux objets en intersection. On commence par définir une boîte englobante 9, 10 autour de chaque objet 11, 12. On identifie ensuite un parallélépipède rectangle 13 qui est l'intersection entre les deux boîtes englobantes 9 et 10. Ce parallélépipède rectangle 13 contient le volume d'intersection qui est le volume rempli par une partie de l'objet 11 et une partie de l'objet 12. Le volume d'intersection 14 est représenté en pointillé sur la figure 2.

A l'origine, les objets 11 et 12 sont simulés en trois dimensions. Mais sur cette figure 2, on a choisi un axe de visualisation de sorte que les objets 11 et 12 sont représentés en deux dimensions. Dans le parallélépipède rectangle 13, les surfaces de contact sont représentées par les traits délimitant les objets 11 et 12. Ensuite, on échantillonne ces surfaces contenues dans le plan de la figure 2. Sur la figure 3 on voit un tel échantillonnage : il s'agit d'un échantillonnage régulier, chaque échantillon ou pixel étant déterminé comme point de croisement entre une droite horizontale et un trait (ou surface) contenu dans le parallélépipède rectangle 13. Sur la figure 3 on voit une pluralité de ces droites horizontales 15 qui croisent les traits délimitant les objets 11 et 12 en des échantillons ou pixels 16a-16d. Ensuite, on réalise une projection de ces pixels 16a-16d selon une direction horizontale. Les surfaces sont alors représentées comme des champs de hauteurs. Comme plusieurs surfaces peuvent se projeter en un même point, on utilise plusieurs couches. La première couche c1 est constituée d'échantillons 16a de premier ordre : c'est-à-dire des échantillons issus d'un premier croisement entre chaque droite horizontale 15 et un trait dans le parallélépipède rectangle 13. La couche c2 contient les échantillons 16b de second ordre correspondant au deuxième croisement entre chaque droite horizontale 15 et les traits à l'intérieur du parallélépipède rectangle 13. Il en est de même pour la couche c3 contenant les échantillons 16c et la couche c4 contenant l'unique échantillon 16d (issu d'une seule ligne 15 qui croise pour la quatrième fois une surface dans le parallélépipède rectangle 13). Les pixels de contact sont les échantillons délimitant le volume d'intersection 14.

Chaque échantillon contient sa hauteur, un identifiant de la primitive géométrique associée, un identifiant de l'objet auquel il appartient, une orientation de la normale à la primitive géométrique associée, et des coordonnées barycentriques sur la primitive géométrique associée.

Sur les figures suivantes on va voir un peu plus détails la façon de calculer et d'appliquer les forces de contact.

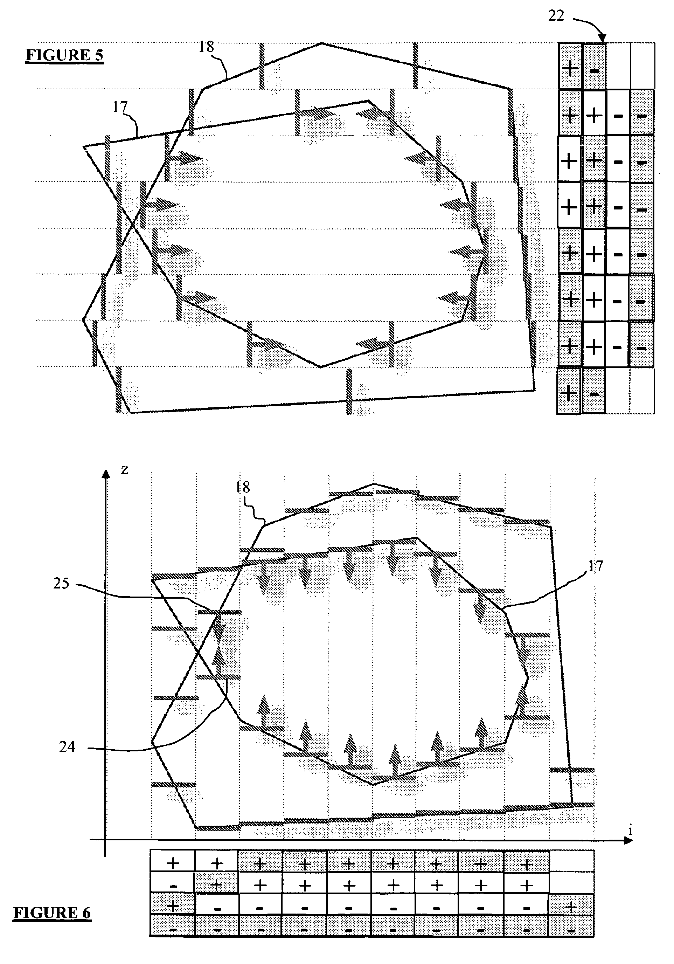

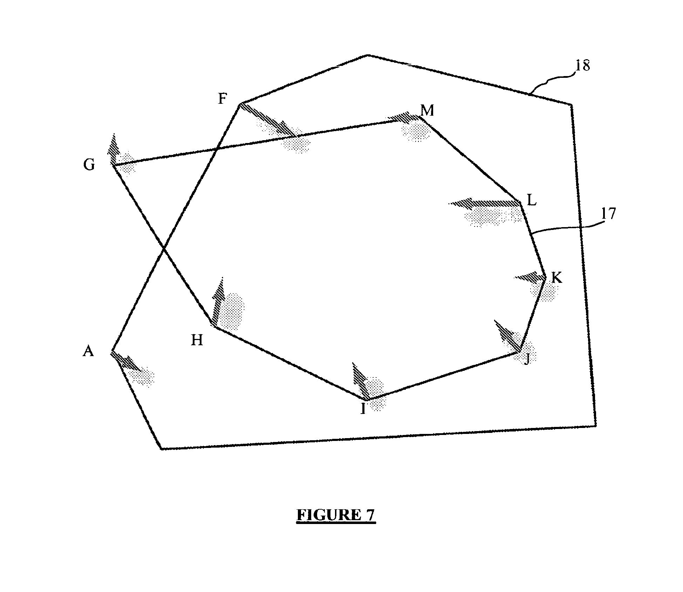

Sur les figures 4 à 7 on voit un autre exemple d'intersection entre deux objets 17 et 18. L'objet 17 est presque entièrement contenu dans l'objet 18. Chaque objet est modélisé selon des primitives triangulaires et on distingue des sommets A à M qui sont en fait les sommets des polygones représentant les objets 17 et 18 sur les figures 4 à 7. Le volume d'intersection 19 est illustré par un polygone en pointillé 23 majoritairement délimité par la surface de l'objet 17 et par une arête de l'objet 18. Ce pointillé 23 représente les surfaces de contact entre les deux objets. Les zones 20 et 21 illustrent les forces de contact. La zone 20 représente la force de contact appliquée par l'objet 18. Les zones 21 représentent les forces de contact appliquées par l'objet 17. Conformément à la présente invention on va appliquer l'algorithme LDI à l'intersection des objets 17 et 18 selon trois axes de visualisation ou axes de projection orthogonaux. Pour simplifier l'exposé, les figures 5 et 6 illustrent uniquement les projections selon deux axes orthogonaux : horizontal sur la figure 5, vertical sur la figure 6.

Sur la figure 5, on voit un échantillonnage des surfaces dans la direction verticale. Chaque trait est un pixel. L'échantillonnage est réalisé selon des couloirs horizontaux. Le cadre 22 est une représentation en champs de hauteurs c'est-à-dire sous forme de couches de pixels échantillonnés sur les surfaces des deux objets 17 et 18. Les signes « + » et « - » dans le cadre 22 correspondent au sens de la pression de répulsion sur le pixel correspondant. Le cadre 22 aide à identifier les intersections entre objets et à identifier les pixels de contact, c'est-à-dire les pixels des surfaces de contact. Sur les figure 5 et 6, les pixels de contact portent chacune une flèche représentant la pression de répulsion. La figure 6 illustre une projection verticale. De la même manière que sur la figure 5, les pixels obtenus après échantillonnage sont représentés par des petits tirets, mais qui sont horizontaux cette fois-ci. Les pixels de contact portent également des flèches représentant des pressions de répulsion.

Le calcul des forces de contact au niveau de chaque sommet A à M passe par un calcul du volume d'intersection 19 selon les trois axes de visualisation. On va voir ce calcul uniquement pour la projection verticale de la figure 6. Le calcul est identique pour les autres axes de visualisation. Selon l'invention, le volume est calculé selon la formule suivante :

$$V = a \sum_{(i,j) \in C} (-1)^d z_{i,j} \quad,$$

Pratiquement, « a » est l'aire de chaque pixel de contact. i,j permettent d'identifier chaque pixel de contact de la figure 6. Pour le pixel de contact 24 (situé sur une arête de l'objet 17) par exemple, la hauteur $z_{i,j}$ liée à ce pixel est sa hauteur dans le repère z tel que représenté sur la figure 6 (axe des ordonnées parallèle à l'axe de projection) ; « d » est égale à 1. Par contre pour le pixel de contact 25 (situé sur une arête de l'objet 18), la hauteur $z_{i,j}$ liée à ce pixel est sa hauteur dans le repère z tel que représenté sur la figure 6 ; « d » est égale à 2. Avec les pixels de contact 24 et 25, on comprend que le calcul du volume d'intersection revient à calculer le volume de la partie hachurée sur la figure 4. 24 est un pixel de contact inférieur. 25 est un pixel de contact supérieur.

Le volume d'intersection est calculé selon un seul axe de visualisation ou bien pour chaque axe de visualisation, dans ce dernier cas, on prendra la moyenne des trois valeurs de volume d'intersection calculées.

Une fois le volume calculé, on calcule pour chaque axe de visualisation et au niveau de chaque sommet A-M, la dérivée partielle du volume par rapport à la hauteur, dans l'exemple de la figure 6 c'est par rapport à l'axe z qui est l'axe de projection. Pour ce faire, on utilise avantageusement l'équation :

$$\frac{\partial V}{\partial z} = a \sum_{(i,j) \in C} (-1)^d \frac{\partial z_{i,j}}{\partial z}$$

On applique cette formule donc pour chaque sommet selon les trois axes de visualisation.

On obtient ainsi un vecteur gradient de la forme :

$$\frac{\partial V}{\partial x} = \left( \frac{\partial V}{\partial x_A}, \frac{\partial V}{\partial y_A}, \frac{\partial V}{\partial z_A}, \frac{\partial V}{\partial x_B}, \dots \right)$$

Selon l'invention, si l'on définit une énergie potentielle par :

$$E = \frac{1}{2} kV^2 \quad ,$$

Alors la force de contact est :

$$f = -kV \frac{\partial V}{\partial x} \quad , \text{ k étant un nombre positif.}$$

En fait, il suffit de récupérer le vecteur gradient calculé précédemment et de multiplier par -kV.

La présente invention permet donc de calculer des forces de contact dans une simulation d'objets mécaniques. Les objets simulés sont munis de surfaces de contact qui interagissent quand les objets s'intersectent. L'invention consiste à modéliser les surfaces de contact sous forme de champs de hauteurs échantillonnés selon trois directions orthogonales, puis à calculer les dérivées du volume d'intersection par rapport aux coordonnées des sommets des triangles selon chaque direction de l'espace, en utilisant trois LDI dans des directions orthogonales. La force de pression agissant sur une surface de contact peut alors être calculée d'après ces dérivées partielles.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de simulation interactive d'une intersection entre au moins deux objets volumiques modélisés au moyen de primitives géométriques ; procédé dans lequel :

   a) on détermine un polyèdre englobant un volume d'intersection V entre les deux objets,
   b) pour un axe de visualisation du polyèdre, on applique un algorithme des « Images à plan de profondeurs » LDI de façon à déterminer un ensemble de pixels de contact,
   **caractérisé en ce qu'**on réalise en outre les étapes suivantes :
   c) on exprime la taille du volume d'intersection V en fonction des pixels de contact,
   d) à chaque sommet des primitives géométriques dans le polyèdre, on calcule une dérivée partielle de la taille du volume d'intersection V par rapport à la coordonnée du sommet selon l'axe de visualisation,
   e) on répète au moins les étapes b) et d) pour deux autres axes orthogonaux de façon à déterminer des dérivées partielles selon trois axes orthogonaux, et
   f) à chaque sommet des primitives géométriques des objets, on associe une force *f* calculée à partir desdites dérivées partielles.

2. Procédé selon la revendication 1, **caractérisé en ce que** la dérivée partielle du volume d'intersection pour un sommet A selon un axe de visualisation z est définie par l'équation suivante :

   $$\frac{\partial V}{\partial z} = a \sum_{(i,j) \in C} (-1)^d \frac{\partial z_{i,j}}{\partial z} \quad \text{« a » étant l'ai-}$$

   re d'un pixel, « C » un ensemble d'indices de fragments qui couvrent la surface du volume d'intersection, $z_{i,j}$ la hauteur des pixels de contact, « d » étant égale à 2 ou à 1 pour respectivement un pixel supérieur ou un pixel inférieur dans la projection selon l'algorithme LDI.

3. Procédé selon la revendication 1 ou 2, **caractérisé en ce qu'**à l'étape f), la force est définie par l'équation suivante : $f = -\frac{\partial E}{\partial x}$ , E étant une énergie potentielle qui est une fonction croissante E du volume d'intersection V, et x un vecteur de coordonnées de sommets.

4. Procédé selon la revendication 3, **caractérisé en ce que** l'énergie potentielle E est définie par l'équation

suivante : $E = \dfrac{1}{2}kV^2$ soit $f = -kV\dfrac{\partial V}{\partial x}$ ,

k étant un nombre positif

5. Procédé selon l'une quelconque des revendications précédentes, **caractérisé en ce qu'**à l'étape c), on exprime le volume d'intersection V à partir de l'équation suivante :

$$V = a \sum_{(i,j)\in C}(-1)^d z_{i,j}$$ « a » étant l'aire d'un pixel, « C » un ensemble d'indices de fragments qui couvrent la surface du volume d'intersection, $z_{i,j}$ la hauteur des pixels de contact, « d » étant égale à 2 ou à 1 pour respectivement un pixel supérieur ou un pixel inférieur dans la projection selon l'algorithme LDI.

6. Procédé selon l'une quelconque des revendications précédentes, **caractérisé en ce qu'**à l'étape e) on répète également l'étape c), le volume d'intersection à considérer pour les étapes suivantes étant 1/3 d'une valeur obtenue en sommant le volume d'intersection calculée à chaque répétition.

7. Procédé selon l'une quelconque des revendications précédentes, **caractérisé en ce qu'**à l'étape b) on associe à chaque pixel de contact :

   - une valeur de hauteur,
   - un identifiant de la primitive géométrique associée à ce pixel de contact,
   - un identifiant de l'objet auquel appartient ce pixel de contact,
   - une orientation de la normale à la primitive géométrique associée à ce pixel de contact, et
   - des coordonnées barycentriques sur la primitive géométrique associée à ce pixel de contact.

8. Procédé selon l'une quelconque des revendications précédentes, **caractérisé en ce que** les primitives géométriques sont des surfaces triangulaires.

9. Procédé selon l'une quelconque des revendications précédentes, **caractérisé en ce que** le polyèdre est défini comme étant un volume issu de l'intersection entre deux boîtes englobant respectivement les deux objets.

10. Procédé selon l'une quelconque des revendications précédentes, **caractérisé en ce que** pour une simulation interactive dynamique, on utilise une matrice de raideur pour encoder la variation des forces en réponse à la variation des positions des sommets.

11. Procédé selon la revendication 10, **caractérisé en ce que** la matrice de raideur est déterminée en calculant un différentiel de la force f.

12. Dispositif de simulation interactive d'une intersection entre au moins deux objets volumiques modélisés au moyen de primitives géométriques ; **caractérisé en ce que** ce dispositif comporte une unité de traitement graphique GPU mettant en oeuvre un procédé selon l'une quelconque des revendications précédentes de façon à calculer des forces de contact.

13. Dispositif selon la revendication 12, **caractérisé en ce qu'**il comprend en outre au moins un registre de volume pour stocker des valeurs de volume d'intersection calculées, et un registre de gradient consistant en un vecteur contenant trois valeurs scalaires par sommet, chacune associée à un axe de visualisation.

14. Dispositif selon la revendication 12 ou 13, **caractérisé en ce qu'**il comprend en outre une unité centrale de traitement CPU apte à récupérer des images calculées par l'unité de traitement graphique et à en déduire les forces à appliquer sur les deux objets.

**Patentansprüche**

1. Verfahren zur interaktiven Simulation einer Überschneidung zwischen wenigstens zwei Volumenobjekten, die mittels geometrischer Primitiven modelliert sind, Verfahren, wobei:

   a) ein Polyeder, das ein Schnittvolumen V zwischen den beiden Objekten umschließt, bestimmt wird,
   b) für eine Visualisierungsachse des Polyeders ein Algorithmus der "Tiefenbilder" LDI angewandt wird, um eine Menge von Kontaktpixeln zu bestimmen, **dadurch gekennzeichnet, dass** ferner die folgenden Schritte durchgeführt werden:
   c) die Größe des Schnittvolumens V in Abhängigkeit der Kontaktpixel ausgedrückt wird,
   d) an jedem Scheitel der geometrischen Primitiven in dem Polyeder eine partielle Ableitung der Größe des Schnittvolumens V in Bezug auf die Koordinate des Scheitels entlang der Visualisierungsachse berechnet wird,
   e) wenigstens die Schritte b) und d) für zwei weitere orthogonale Achsen wiederholt werden, um partielle Ableitungen entlang von drei orthogonalen Achsen zu bestimmen, und

f) jedem Scheitel der geometrischen Primitiven der Objekte eine anhand der partiellen Ableitungen berechnete Kraft f zugeordnet wird.

2. Verfahren nach Anspruch 1, **dadurch gekennzeichnet, dass** die partielle Ableitung des Schnittvolumens für einen Scheitel A entlang einer Visualisierungsachse Z durch folgende Gleichung definiert ist: $\dfrac{\partial V}{\partial z} = a \sum_{(i,j)\in C}(-1)^d \dfrac{\partial z_{i,j}}{\partial z}$, wobei "a" der Flächeninhalt eines Pixels ist, "C" eine Menge von Indizes von Fragmenten ist, welche die Fläche des Schnittvolumens bedecken, $z_{i,j}$ die Höhe der Kontaktpixel ist, "d" gleich 2 oder 1 für ein oberes Pixel bzw. ein unteres Pixel in der Projektion gemäß dem Algorithmus LDI ist.

3. Verfahren nach Anspruch 1 oder 2, **dadurch gekennzeichnet, dass** bei Schritt f) die Kraft durch folgende Gleichung definiert ist: $f = -\dfrac{\partial E}{\partial x}$, wobei E eine potentielle Energie ist, welche eine wachsende Funktion des Schnittvolumens V ist, und x ein Vektor von Koordinaten von Scheiteln ist.

4. Verfahren nach Anspruch 3, **dadurch gekennzeichnet, dass** die potentielle Energie E durch folgende Gleichung definiert ist: $E = \dfrac{1}{2}kV^2$, das heißt $f = kV\dfrac{\partial V}{\partial x}$, wobei k eine positive Zahl ist.

5. Verfahren nach einem der vorhergehenden Ansprüche, **dadurch gekennzeichnet, dass** bei Schritt c) das Schnittvolumen V mittels der folgenden Gleichung ausgedrückt wird: $V = a \sum_{(i,j)\in C}(-1)^d z_{i,j}$, wobei "a" der Flächeninhalt eines Pixels ist, "C" eine Menge von Indizes von Fragmenten ist, welche die Fläche des Schnittvolumens bedecken, $z_{i,j}$ die Höhe der Kontaktpixel ist, "d" gleich 2 oder 1 für ein oberes Pixel bzw. ein unteres Pixel in der Projektion gemäß dem Algorithmus LDI ist.

6. Verfahren nach einem der vorhergehenden Ansprüche, **dadurch gekennzeichnet, dass** bei Schritt e) auch Schritt c) wiederholt wird, wobei das für die folgenden Schritte zu berücksichtigende Schnittvolumen 1/3 eines Wertes ist, der durch Summieren des bei jeder Wiederholung berechneten Schnittvolumens ist.

7. Verfahren nach einem der vorhergehenden Ansprüche, **dadurch gekennzeichnet, dass** bei Schritt b) jedem Kontaktpixel zugeordnet wird:

   - ein Höhenwert,
   - eine Kennung der diesem Kontaktpixel zugeordneten geometrischen Primitiven,
   - eine Kennung des Objektes, zu dem dieses Kontaktpixel gehört,
   - eine Ausrichtung der Normalen zu der diesem Kontaktpixel zugeordneten geometrischen Primitiven und
   - baryzentrische Koordinaten über die diesem Kontaktpixel zugeordnete geometrische Primitive.

8. Verfahren nach einem der vorhergehenden Ansprüche, **dadurch gekennzeichnet, dass** die geometrischen Primitiven dreieckige Flächen sind.

9. Verfahren nach einem der vorhergehenden Ansprüche, **dadurch gekennzeichnet, dass** das Polyeder als ein aus der Überschneidung zwischen zwei jeweils die beiden Objekte umschließenden Boxen hervorgegangenes Volumen definiert ist.

10. Verfahren nach einem der vorhergehenden Ansprüche, **dadurch gekennzeichnet, dass** für eine dynamische interaktive Simulation eine Steifigkeitsmatrix verwendet wird, um die Änderung der Kräfte als Reaktion auf die Änderung der Positionen der Scheitel zu codieren.

11. Verfahren nach Anspruch 10, **dadurch gekennzeichnet, dass** die Steifigkeitsmatrix durch Berechnen eines Differentials der Kraft f bestimmt wird.

12. Vorrichtung zur interaktiven Simulation einer Überschneidung zwischen wenigstens zwei Volumenobjekten, die mittels geometrischer Primitiven modelliert sind, **dadurch gekennzeichnet, dass** diese Vorrichtung eine graphische Verarbeitungseinheit GPU umfasst, die ein Verfahren nach einem der vorhergehenden Ansprüche durchführt, um Kontaktkräfte zu berechnen.

13. Vorrichtung nach Anspruch 12, **dadurch gekennzeichnet, dass** sie ferner wenigstens ein Volumen-Register umfasst, um berechnete Schnittvolumenwerte zu speichern, sowie ein Gradienten-Register, das aus einem Vektor besteht, der drei Skalarwerte pro Scheitel enthält, wobei ein jeder einer Visualisierungsachse zugeordnet ist.

**14.** Vorrichtung nach Anspruch 12 oder 13, **dadurch gekennzeichnet, dass** sie ferner eine Zentraleinheit CPU umfasst, die geeignet ist, durch die graphische Verarbeitungseinheit berechnete Bilder zu gewinnen und hieraus die an die beiden Objekte anzulegenden Kräfte abzuleiten.

**Claims**

**1.** Method for interactive simulation of an intersection between at least two volumetric objects modelled by means of geometric primitives; in said method:

   a) a bounding polyhedron of an intersection volume V between the two objects is determined,
   b) for a visualization axis of the polyhedron, a layered depth image (LDI) algorithm is applied so as to determine a set of contact pixels, **characterized in that** additionally the following stages are carried out:
   c) the size of the intersection volume V is expressed depending on the contact pixels,
   d) at each vertex of the geometric primitives in the polyhedron, a partial derivative of the size of the intersection volume V is calculated with respect to the coordinate of the vertex on the visualization axis,
   e) at least stages b) and d) are repeated for two other orthogonal axes so as to determine partial derivatives in three orthogonal axes, and
   f) a force f calculated from said partial derivatives is associated with each vertex of the geometric primitives of the objects.

**2.** Method according to claim 1, **characterized in that** the partial derivative of the intersection volume for a vertex A on a visualization axis z is defined by the following equation: $\dfrac{\partial V}{\partial z} = a \displaystyle\sum_{(i,j)\in C} (-1)^d \dfrac{\partial z_{i,j}}{\partial z}$, "a" being the area of a pixel, "C" is a set of indices of fragments that cover the surface of the intersection volume, $z_{i,j}$ is the height of the contact pixels, "d" is equal to 2 or to 1 for an upper pixel or a lower pixel respectively in the projection according to the LDI algorithm.

**3.** Method according to claim 1 or 2, **characterized in that** in stage f), the force is defined by the following equation: $f = -\dfrac{\partial E}{\partial x}$, E being a potential energy, which is an increasing function of the intersection volume V, and x is a vector of vertex coordinates.

**4.** Method according to claim 3, **characterized in that** the potential energy E is defined by the following equation: $E = \dfrac{1}{2} kV^2$, i.e. $f = -kV\dfrac{\partial V}{\partial x}$, k being a positive number

**5.** Method according to any one of the previous claims, **characterized in that** in stage c), the intersection volume V is expressed from the following equation: $V = a \displaystyle\sum_{(i,j)\in C} (-1)^d z_{i,j}$, "a" being the area of a pixel, "C" is a set of indices of fragments covering the surface of the intersection volume, $z_{i,j}$ is the height of the contact pixels, "d" is equal to 2 or to 1 for an upper pixel or a lower pixel respectively in the projection according to the LDI algorithm.

**6.** Method according to any one of the previous claims, **characterized in that** stage c) is also repeated in stage e), the intersection volume to be considered for the next stages being 1/3 of a value obtained by summing the intersection volume calculated at each repetition.

**7.** Method according to any one of the previous claims, **characterized in that** in stage b) each contact pixel is associated with:

   - a height value,
   - an identifier of the geometric primitive associated with this contact pixel,
   - an identifier of the object to which this contact pixel belongs,
   - an orientation of the normal to the geometric primitive associated with this contact pixel, and
   - barycentric coordinates on the geometric primitive associated with this contact pixel.

**8.** Method according to any one of the previous claims, **characterized in that** the geometric primitives are triangular surfaces.

**9.** Method according to any one of the previous claims, **characterized in that** the polyhedron is defined as being a volume resulting from the intersection between two bounding boxes of the two objects respectively.

**10.** Method according to any one of the previous claims, **characterized in that** for an interactive dynamic simulation, a stiffness matrix is used for encoding the variation of the forces in response to the variation of the positions of the vertices.

**11.** Method according to claim 10, **characterized in that** the stiffness matrix is determined by calculating a differential of the force f.

12. Device for interactive simulation of an intersection between at least two volumetric objects modelled by means of geometric primitives; **characterized in that** said device comprises a graphics processing unit GPU implementing a method according to any one of the previous claims for calculating contact forces.

13. Device according to claim 12, **characterized in that** it further comprises at least one volume register for storing calculated values of intersection volume, and a gradient register comprising a vector containing three scalar values per vertex, each associated with a visualization axis.

14. Device according to claim 12 or 13, **characterized in that** it further comprises a central processing unit CPU capable of recovering images calculated by the graphics processing unit and for deducing from them the forces to be applied on the two objects.

**FIGURE 1**

**FIGURE 2**

**FIGURE 3**

**FIGURE 4**

**FIGURE 5**

**FIGURE 6**

**FIGURE 7**